# EUROPEAN PATENT APPLICATION

(11) **EP 2 444 264 A2**
(43) Date of publication of application: **25.04.2012**
(21) Application number: 11250854.4
(22) Date of filing: 18.10.2011
(51) Int. Cl.: B60J 7/08

(54) **A covering system**

(30) Priority: 19.10.2010 GB 1017635; 01.06.2011 GB 1109200
(71) Applicant: Hines, Steven William, Swanley Kent BR8 8EE (GB)
(72) Inventor: Hines, Steven William, Swanley Kent BR8 8EE (GB)
(74) Representative: Sayer, Robert David

(57) **Abstract**

A covering system for an open-top container or truck body 11 has upright walls 13 and a hollow top rail 19 at the uppermost edge of at least one of the walls. The covering system comprises a driving mechanism 43 the majority of which is housed within the void of one of the top rails 19, the driving mechanism being connected to an arm 33 which is pivotally connected to a wall of the container or truck body. The arm 33 extends upwardly from its pivotal connection to a position above the uppermost edges of the walls and is connected to a web of material 31, the driving mechanism being arranged in use to impart a rotational driving force on the arm such that the web of material can be drawn over the container or truck body.

## Description

### Field of the Invention

This invention relates to a covering system for a container or truck body, particularly, though not exclusively, a commercial vehicle covering system.

### Background of the Invention

There is a need for loads which are held within truck bodies, trailer bodies, and containers to be covered to avoid spillage and/or protect the load from adverse weather. For this purpose, various types of container covering systems are known, for example as disclosed in EP1403115. Such systems generally employ a sheet-like tarpaulin or cover, which is wound onto a roller provided at one end of the container or truck body, and a deployment mechanism separate from the container or truck body.

It is becoming common for legislation to limit the maximum width of truck bodies, trailer bodies and containers, this width having to take into account frameworks and mechanisms such as those provided with covering systems. For example, current European legislation has limited the maximum width to 2.55 metres. With conventional covering systems, therefore, it is necessary to limit the width of the container or body so that the both it and the external covering mechanism fall within the maximum width.

### Summary of the Invention

In a first aspect, there is provided a covering system incorporated with a container or truck body, the container or truck body having a hollow support rail at the top of one or more upright walls thereof, the covering system comprising at least one arm located on a wall of the container or truck body, a sheet-like cover connected at one end to the or each arm and at the other end connected to a cover mounting, and a powering mechanism located in the region of the top rail, in vertical alignment therewith, which mechanism is arranged, in use, to apply a movable force to the or each arm such that in use the cover is selectively withdrawn from the cover mounting to extend over the a load within the container or truck body.

By arranging for the powering mechanism to be incorporated on the container or truck body, in vertical alignment with the top rail, the overall width of the structure can be kept within appropriate limits whilst maximising the width of the loading area.

Preferably, the powering mechanism is located internally within the void of the top rail. This offers still further advantages in terms of enclosing the powering mechanism and avoiding structural damage thereto.

The covering system may comprise a pair of opposed arms interconnected by a crossbar to which the cover is connected.

The cover mounting may be located on or adjacent a first end of the container or truck body and includes a shaft on which the cover is wound, the shaft extending across said first end, the cover being held under tension between the shaft and the or each arm by the powering mechanism which applies a biasing force on the arms in the direction of a second, opposite, end of the container or truck body.

The shaft may be selectively rotatable in first and second directions by a winding control means so as to allow withdrawal of the cover from the mounting when rotated in the first direction and re-winding of the cover when rotated in the second direction, against the biasing force.

The powering mechanism may comprise a coil spring which applies a rotational force to the or each arm by means of a rotatable shaft.

According to a second aspect, there is provided a covering system incorporated with an open-top container or truck body, the container or truck body comprising substantially upright walls and a support rail provided at the uppermost edge of opposed lengthwise walls, the covering system comprising: opposed first and second arms connected to respective lengthwise walls; a sheet-like material mounted on a rotatable member connected to or adjacent a first widthways wall of the container, a free end of the material being connected to the arms; and a deployment mechanism connected to at least one of the lengthwise walls, in vertical alignment with the top support rail, which deployment mechanism is arranged in use to transmit a force to the arms to cause unwinding of the cover from the rotatable member as the free end is moved towards a second, opposite widthways wall.

The deployment mechanism may be located internally within the void of the top support rail.

The deployment mechanism may include a coil spring arranged to apply a biasing force on the arms through a rotatable shaft.

The first and second arms may be interconnected by a crossbar extending across the widthways extent of the container or truck body, the free end of the cover being attached to the crossbar.

According to a third aspect, there is provided a covering system for an open-top container or truck body having upright walls and a hollow top rail at the uppermost edge of at least one of the walls, the covering system comprising a driving mechanism housed at least partially within the void of one of the top rails, the driving mechanism being connected to an arm which is pivotally connected to a wall of the container or truck body, which arm extends upwardly from its pivotal connection to a position above the uppermost edges of the walls and is connected to a web of material, the driving mechanism being arranged in use to impart a rotational driving force on the arm such that the web of material can be drawn over the container or truck body.

According to a fourth aspect, there is provided a method of fitting a covering system on an open-top container or truck body having upright walls and a hollow top rail at the uppermost edge of at least one of the walls, the method comprising: fitting a driving mechanism at least partially within the void of one of the top rails, pivotally connecting a longitudinal arm to a wall of the container or truck body such that it extends upwardly from its pivotal connection to a position above the uppermost edges of the walls, connecting an upper part of the arm to a web of material, and connecting the driving mechanism to the longitudinal arm.

### Brief Description of the Drawings

The invention will now be described, by way of example, with reference to the accompanying drawings, in which:
Figure 1 is a perspective view of a generalised container having top rails, which is useful for understanding the invention;
Figure 2 is a cross-sectional view of a top rail of Figure 1;
Figure 3 is a perspective view of a truck or container body incorporating a covering system according to a first embodiment;
Figure 4 is a cross-sectional view of a top rail having a driving mechanism therein, employed in the embodiment shown in Figure 3; and
Figure 5 is a cross-sectional view of a top rail which is useful for explaining a second embodiment.

### Detailed Description of Preferred Embodiments

There is a general need for the loads held within truck bodies, trailer bodies and containers to be covered from ground level and within the width of the container or body. For this, we describe a powered covering system with framework arms to lift a web of material, such as tarpaulin, to cover over the load.

The covering system can be powered by any means from within the top rail or rails of a truck body, trailer body, or demountable container such as a skip container, hook loaded waste container or cable loaded waste container, for the purpose of powering a set of framework arms from one side or end of the body or container in order to carry a tarpaulin or cover which is attached to the crossbar of the framework over the load.

The covering system can be powered by any means such as a spring or springs or a hydraulic, electric or air drive mechanism from within the top rail or rails.

The mechanism for powering the system can be mounted within the void of the top rail.

The top rail of the truck body, trailer body or demountable container is the supporting rail that follows the top of the body or container.

The mechanism for powering the system is mounted within the void of any top rail regardless of the rail's size, shape or design.

The mechanism for powering the covering system transfers the power to the arms by means of a rotating shaft or bracket.

The mechanism for powering the covering system can face and operate in any direction.

The framework can face and operate in any direction.

The tarpaulin or cover that is attached to the crossbar of the framework set of arms is also attached to a rotating shaft that can be powered by any means at one end of the truck body or container which will wind the tarpaulin around the shaft depending on the direction that the shaft is powered.

The tarpaulin or cover will be released and retracted using the opposing forces of the powering mechanism that powers the arm framework and the powering mechanism that winds the tarpaulin or cover around the shaft.

The rotating shaft at the front of the truck body or container can be powered by any means such as springs or a hydraulic, electric or air -driven mechanism.

Embodiments described herein relate to a covering system incorporated as part of open-top vehicle body, trailer body or container, whether fixed or demountable from the vehicle, although for ease of explanation the term "container" will now be used throughout.

Each container type comprises a top rail, which is an industry-standard term describing the longitudinal support member at the top edge of each upright wall. The top rail may be solid or hollow.

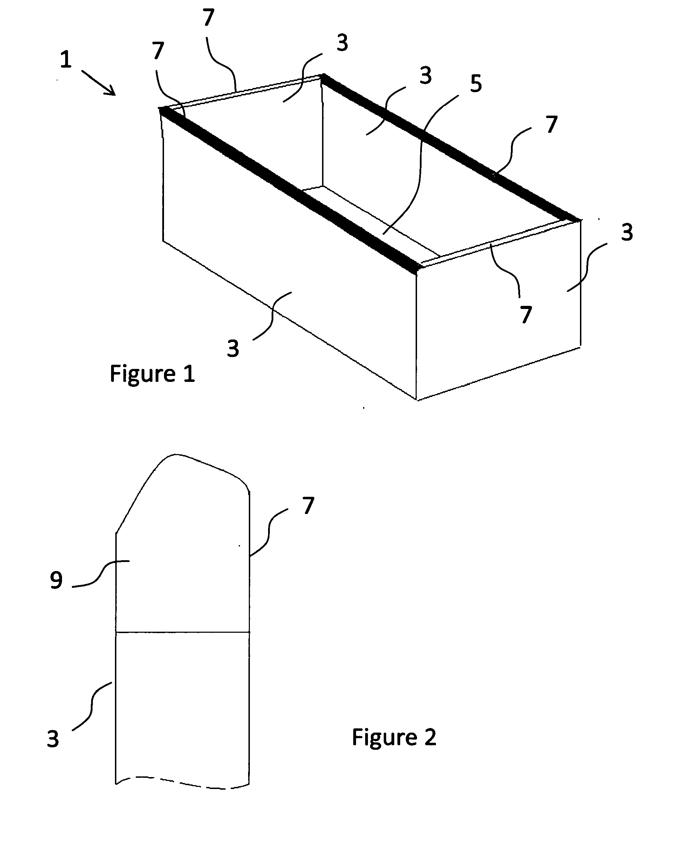

Figure 1 shows a generalised form of vehicle container 1, comprising four upright walls 3 and a base 5. At the uppermost edge of each wall 3 is provided a top rail 7, the rails on the shorter, widthways walls sometimes being called headers. The front header is that which is located on the wall nearest the vehicle cab and the rear header is that which is on top of the opposite widthways wall, furthest from the cab.

Figure 2 shows a typical top rail 7 in cross-section. In this case, the top rail 7 is hollow. In a first embodiment, the void 9 within the top rail facilitates a space into which is mounted part of a deployment mechanism for extending and retracting a cover over the open-top container 1.

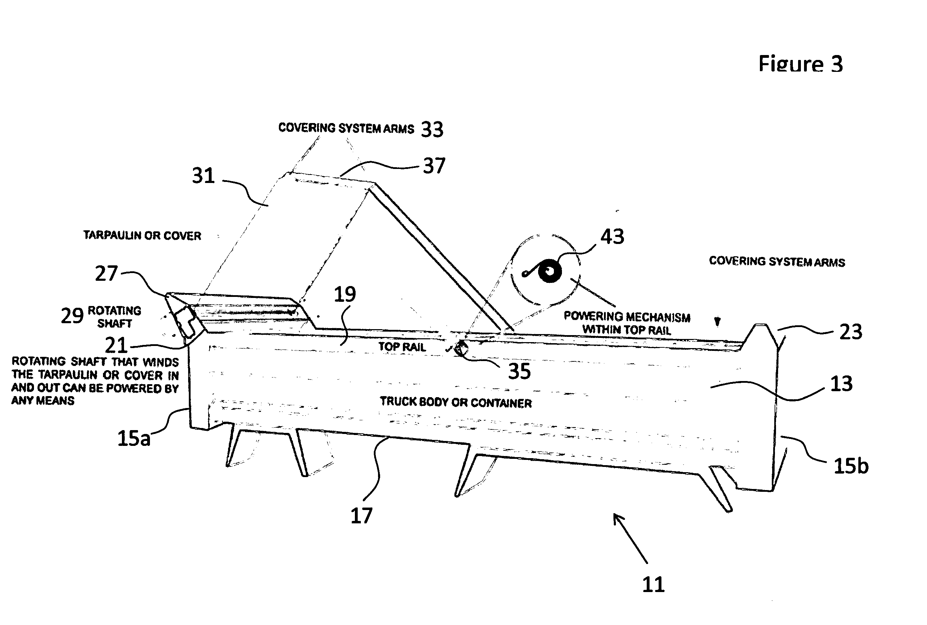

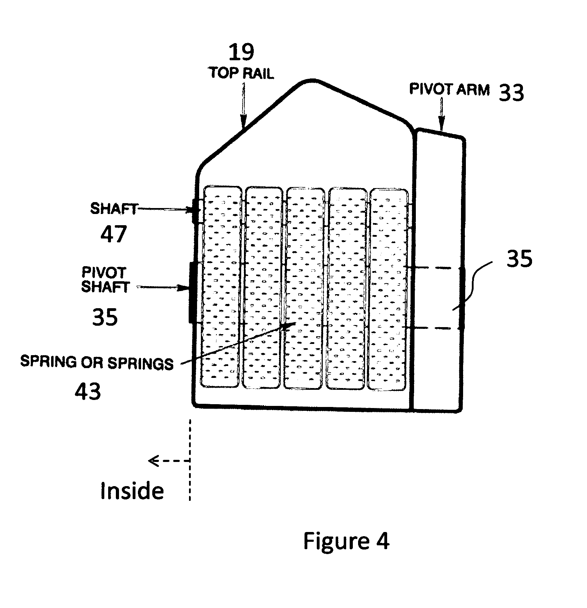

The first embodiment will now be described in detail with reference to Figures 3 and 4.

Referring to Figure 3, there is shown an open-top vehicle body or container 11, specifically one which comprises four generally rectangular upright walls, namely first and second lengthways walls 13, front and rear widthways walls 15a, 15b, and a base 17 (not shown). A top rail 19 is provided at the uppermost edge of each lengthways wall 13. Front and rear headers 21, 23 are provided at the uppermost edge of the front and rear walls 15, respectively. Together, the top rails 19 and headers 21, 23 provide a support structure.

A cover mounting 27 is attached to the front header. The cover mounting 27 comprises an elongate housing in which is mounted a longitudinal roller 29 held between rotatable end holders (not shown). The roller 29 is mounted substantially parallel to the front wall 15a. A sheet-like tarpaulin cover 31 is wound over the roller 29 with a free end of the cover extending through a slot for connection to a deployment system, to be described below.

The roller 29 is connected to an electric motor (or alternatively to a pneumatic or hydraulic motor)to allow selective rotation of the roller in the clockwise and counter-clockwise directions in accordance with an operating mode selectable by a user. The roller can also be locked stationary. It will therefore be appreciated that, in use, the cover can be wound and unwound from the roller depending on the operating mode.

The deployment system comprises a framework made up of a pair of opposed arms 33, the arms being pivotally connected, at their lower ends, to a respective side 13 of the container 11 by means of a pivot shaft 35. The arms 33 are interconnected at or near their upper ends by means of a crossbar 37 to which is connected to a free end of the tarpaulin cover 31. It will therefore be appreciated that pivotal motion of the arms towards the rear wall 15b will deploy the cover 31 due to the consequential movement of the crossbar 37 over the container or body.

Referring to Figure 4, each pivot shaft 35 is mounted horizontally through a respective top rail 19, a first end of the shaft being attached to a rotational mount 41 on the innermost upright wall of the rail, and the second end extending through, and slightly beyond, the opposite and outermost upright wall 13. The second end is fixed to the lower part of the pivotal arm 33.

Within one or both top rails 19 is or are provided a plurality of coil springs 43, specifically torsion springs. In this embodiment, five separate, torsion springs 43 are arranged side-by-side within the top rail 19, although in theory one may suffice. Each spring 43 follows a figure-of-eight type structure, defining two interior loops. A fixing shaft 47 extends through a first loop in order to fix the relative position of the springs within the rail 19. The pivot shaft 35 associated with each arm 33 extends through, and is connected to, the second, larger, loop of each spring 43.

The purpose of the springs 43 is to impart a biased driving force on the framework so that it is ordinarily urged towards the rear wall 15b of the container or body. The cover 31 is therefore in tension between the roller 29 and the framework. An opposing force can be applied by the roller 29 when fixed stationary or rotated . When the roller 29 is rotated counter-clockwise, the framework moves towards the front wall 15a thereby uncovering the container 11 and storing energy in the springs 43. When the cover 31 is to be deployed, the roller 29 rotates clockwise and the springs 43 release their energy to move the framework automatically towards the rear wall 15a.

In this embodiment, therefore, selective deployment is enabled by the electric motor in co-operation with the energy release of the springs 43.

In an alternative arrangement, not shown, the situation may be reversed with a motor provided in one or more of the top rails 19 and a spring provided in the cover mounting 27.

Further, the crossbar 37 part of the framework can be avoided by attaching respective edges of the cover's free-end directly to the pivot arms 33.

Advantageously, by providing the springs 43, or indeed any driving system, wholly or partially within the void of the hollow rail 19, there is minimal protrusion of the deployment system from the side walls of the container 11. The driving system, i.e. that part which applies energy to the arms 33, may be entirely enclosed within the void. It is only the material thickness of the pivotal arms 33 that protrude outside of the top rail 19 and therefore the overall width of the container can be maximised whilst complying with the relevant legislation with regard to container dimensions. The springs 43 are also stored substantially out-of-sight and are less likely to be damaged and/or affected by weather or environmental conditions.

As an alternative to using coil springs, alternative driving means can be provided for imparting motion on the pivoting arms 33. For example, a pneumatic or hydraulic piston and cylinder system can be employed in place of the springs.

Although a pair of pivoting arms 33 are used in the above-described embodiment, in theory, only one arm may be needed.

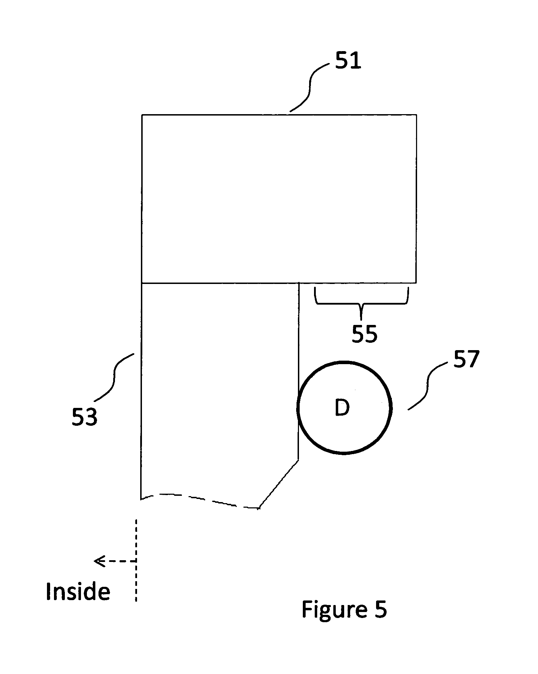

A second embodiment will now be described with reference to Figure 5.

In this embodiment, the top rail 51 is of the type that extends outwardly of the underlying upright wall 53 to form a sort of lip 55. In this case, the powering mechanism 57 of the deployment system, whether a spring or piston-and-cylinder type mechanism, can be placed below the lip 55, as indicated. Due to it being in vertical alignment with the top rail 51, similar advantages are present in terms of minimising the overall width of the container, including the covering mechanism.

## Claims

1. A covering system for a container or truck body, the container or truck body having a support rail at the top of one or more upright walls thereof, the covering system comprising at least one arm connected to a wall of the container or truck body, a sheet-like cover connected by one part to the or each arm and by another part to a cover mounting, and a driving mechanism connected to the container or truck body in the region of the top rail, in vertical alignment therewith, which driving mechanism is arranged, in use, to apply a driving force to the or each arm such that in use the cover is selectively withdrawn from the cover mounting to extend over the a load within the container or truck body.

2. A covering system according to claim 1, wherein the top rail is hollow and at least part of the driving mechanism is located internally within the void of the top rail.

3. A covering system according to claim 1 or claim 2, comprising a pair of opposed arms interconnected by a crossbar to which the cover is connected at one end.

4. A covering system according to any preceding claim, in which the cover mounting is located on or adjacent a first end of the container or truck body and includes a shaft on which the cover is wound, the shaft extending across said first end, the cover being held under tension between the shaft and the or each arm by the driving mechanism which applies a biasing force on the arms in the direction of a second, opposite, end of the container or truck body.

5. A covering system according to claim 4, wherein the shaft is selectively rotatable in first and second directions by a winding control means so as to allow withdrawal of the cover from the mounting when rotated in the first direction and re-winding of the cover when rotated in the second direction, against the biasing force of the driving mechanism.

6. A covering system according to any preceding claim, wherein the driving mechanism comprises a coil spring which applies a rotational force to the or each arm by means of a rotatable shaft.

7. A covering system for an open-top container or truck body, the container or truck body comprising substantially upright walls and a support rail provided at the uppermost edge of opposed lengthwise walls, the covering system comprising. opposed first and second arms for connection to respective lengthwise walls; a sheet-like material mounted on a rotatable member connected to or adjacent a first widthways wall of the container or truck body, a free end of the material being connected to the arms; and a deployment mechanism connected to at least one of the lengthwise walls, in vertical alignment with the top support rail, which deployment mechanism is arranged in use to transmit a driving force to at least one of the arms to cause unwinding of the cover from the rotatable member as the free end is moved towards a second, opposite widthways wall.

8. A covering system according to claim 7, wherein at least part of the deployment mechanism is located internally within the void of the top support rail.

9. A covering system according to claim 7 or claim 8, wherein the deployment mechanism is a coil spring arranged to apply a biasing force on the arms through a rotatable shaft.

10. A covering system according to any of claims 7 to 9, wherein the first and second arms are interconnected by a crossbar extending across the widthways extent of the container or truck body, the free end of the cover being attached to the crossbar.

11. A covering system for an open-top container or truck body having upright walls and a hollow top rail at the uppermost edge of at least one of the walls, the covering system comprising a driving mechanism the majority of which is housed within the void of one of the top rails, the driving mechanism being connected to an arm which is pivotally connected to a wall of the container or truck body, which arm extends upwardly from its pivotal connection to a position above the uppermost edges of the walls and is connected to a web of material, the driving mechanism being arranged in use to impart a rotational driving force on the arm such that the web of material can be drawn over the container or truck body.

12. A method of fitting a covering system on an open-top container or truck body having upright walls and a hollow top rail at the uppermost edge of at least one of the walls, the method comprising: fitting a driving mechanism at least partially within the void of one of the top rails, pivotally connecting a longitudinal arm to a wall of the container or truck body such that it extends upwardly from its pivotal connection to a position above the uppermost edges of the walls, connecting an upper part of the arm to a web of material, and connecting the driving mechanism to the longitudinal arm.
